# DEMANDE DE BREVET EUROPEEN

(11) **EP 0 933 960 A1**
(43) Date de publication de la demande: **04.08.1999**
(21) Numéro de dépôt: 98402908.2
(22) Date de dépôt: 23.11.1998
(51) Int. Cl.: H04Q 7/38

(54) **Procédé de coopération entre entités d'un réseau cellulaire de radiocommunications mobiles, lors de transferts de communications inter-cellulaires**

(30) Priorité: 27.11.1997 FR 9714911
(71) Demandeur: ALCATEL, 75008 Paris (FR)
(72) Inventeur: Roberts, Michael, 92200 Neuilly S/Seine (FR)
(74) Mandataire: El Manouni, Josiane

(57) **Abrégé**

Procédé de coopération entre entités d'un réseau cellulaire de radiocommunications mobiles, lors de transferts de communication inter-cellulaires, caractérisé en ce que, lors d'un transfert de communication, d'une cellule dite cellule serveuse actuelle (Ci) contrôlée par une entité de ce système dite entité serveuse actuelle (BSCi), vers une cellule dite nouvelle cellule serveuse (Cj) contrôlée par une entité de ce système distincte de ladite entité serveuse actuelle et dite nouvelle entité serveuse (BSCj), ladite nouvelle entité serveuse (BSCj) est informée de la raison dudit transfert.

## Description

La présente invention concerne d'une manière générale les systèmes cellulaires de radiocommunications mobiles, plus particulièrement la gestion des ressources radio dans ces systèmes, et plus particulièrement encore la gestion des ressources radio dans ces systèmes lors de transferts de communications inter-cellulaires (appelés aussi "handovers").

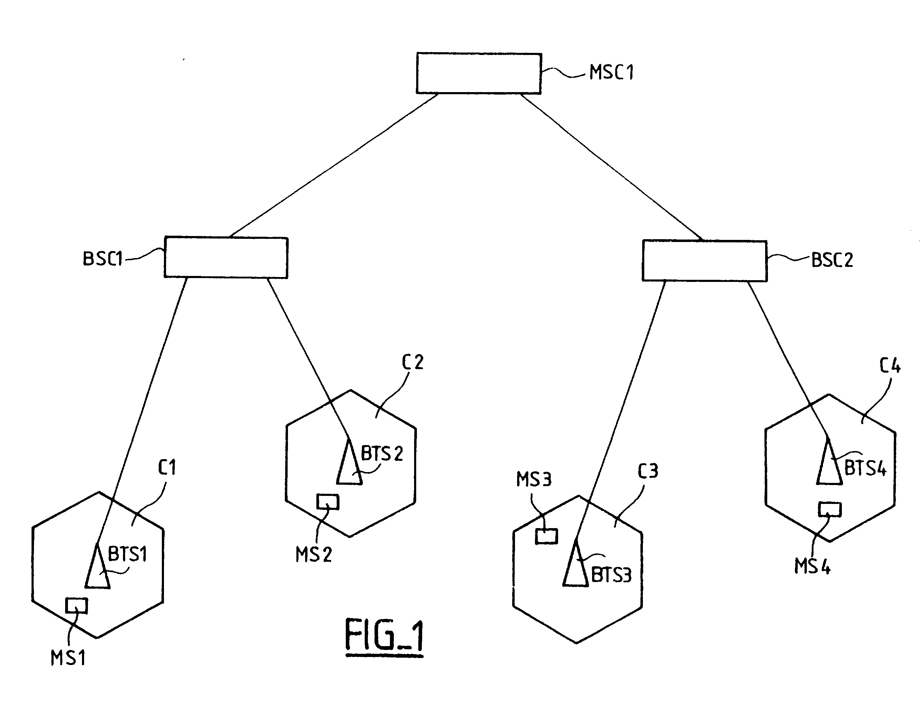

On rappelle, en relation avec la figure 1, l'architecture générale d'un système cellulaire de radiocommunications mobiles, tel que notamment le système GSM (pour "Global System for Mobile Communications"). Un tel système comporte essentiellement:
- un ensemble de stations de base, appelées aussi BTS (pour "Base Transceiver Station"), telles que celles notées BTS1, BTS2, BTS3 et BTS4, chacune de ces stations de base étant, dans l'exemple illustré, affectée à une cellule notée respectivement C1, C2, C3, et C4 (d'autres exemples étant bien entendu possibles, où une même BTS serait affectée à plusieurs cellules), et ces stations de base étant en relation avec des stations mobiles, telles que MS1, MS2, MS3, MS4, situées dans ces cellules,
- un ensemble de contrôleurs de stations de base, appelés aussi BSC (pour "Base Station Controller"), tels que ceux notés BSC1 et BSC2, chacun de ces BSC contrôlant, du point de vue de la gestion des ressources radio, un sous-ensemble de cellules, le contrôleur de stations de base BSC1 contrôlant dans l'exemple illustré les cellules C1 et C2, et le contrôleur de stations de base BSC2 contrôlant dans cet exemple les cellules C3 et C4,
- un ensemble de centres de commutation mobile, appelés aussi MSC ("pour Mobile Switching Center"), tels que celui noté MSC1, chacun de ces MSC étant en relation avec des réseaux extérieurs tels que notamment les réseaux PSTN (pour "Public Switched Telephone Network") ou ISDN (pour "Integrated Services Digital Network"), et contrôlant, du point de vue de la gestion des communications, un sous-ensemble de contrôleurs de stations de base, le centre de commutation mobile MSC1 contrôlant dans l'exemple illustré les contrôleurs de stations de base BSC1 et BSC2.

Un transfert de communication dans un tel système est généralement décidé pour des raisons ayant trait à l'amélioration de la qualité de transmission des signaux radio dans le réseau, notamment pour améliorer la qualité de la communication en cours (en particulier pour éviter une coupure de cette communication), ou pour améliorer le niveau global d'interférence dans le réseau.

Un transfert de communication dans un tel système peut aussi être décidé pour d'autres raisons, notamment pour faire face à une charge de trafic trop importante dans une cellule, ou en raison d'opérations de contrôle ou de maintenance en cours dans une cellule. On parle aussi alors de transfert "forcé", car un tel transfert peut aller à l'encontre des objectifs recherchés avec les raisons mentionnées précédemment.

Dans un tel système une décision d'effectuer un transfert de communication est prise par le réseau sur la base d'un certain nombre de paramètres, tels que notamment des résultats de mesures sur des signaux radio pour la cellule serveuse actuelle et pour des cellules voisines de la cellule serveuse actuelle, et des indications sur la charge de trafic des cellules et/ou des données de commande d'opérateur.

La cellule vers laquelle la communication est à transférer, dite nouvelle cellule serveuse, est en outre choisie parmi un ensemble de cellules dites cellules candidates (déterminées sur la base desdits résultats de mesures), de la manière suivante.

Un transfert de communication est tout d'abord demandé vers la meilleure des cellules candidates. Dans le cas où un tel transfert s'avère possible, cette meilleure cellule candidate constitue la nouvelle cellule serveuse. Dans le cas où un tel transfert ne s'avère pas possible, un transfert est demandé vers la cellule candidate suivante, dans l'ordre de préférence de ces cellules candidates, et ainsi de suite.

Une cellule candidate vers laquelle un transfert est demandé est aussi appelée cellule cible.

Dans le cas de cellule cible contrôlée par le même BSC que la cellule serveuse actuelle, ce qui correspond par exemple, sur la figure 1, à une demande de transfert de communication de la cellule C1 vers la cellule C2, ou de la cellule C3 vers la cellule C4 (un tel transfert étant aussi appelé transfert interne, ou transfert intra-BSC), le BSC concerné est en mesure de déterminer lui-même, de manière interne, si un transfert est ou non possible vers cette cellule cible, puisque ce BSC est l'entité de ce réseau chargée de la gestion des ressources radio pour ces cellules serveuse et cible.

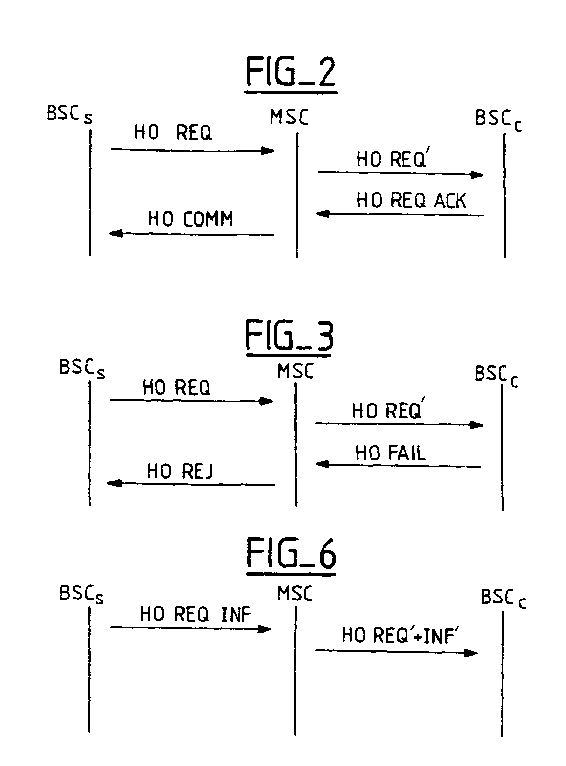

Dans le cas de cellule cible contrôlée par un BSC, dit BSC cible, autre que le BSC dit BSC serveur actuel (ou plus simplement dans ce qui suit BSC serveur) contrôlant la cellule serveuse actuelle (dite aussi plus simplement dans ce qui suit cellule serveuse), ce qui correspond par exemple, sur la figure 1, à une demande de transfert de communication de l'une ou l'autre des cellules C1 et C2 vers l'une ou l'autre des cellules C3 et C4, (un tel transfert étant aussi appelé transfert externe, ou transfert inter-BSC), la procédure est celle rappelée sur l'une ou l'autre des figures 2 et 3, à savoir:
- le BSC serveur, noté BSCs, adresse tout d'abord au MSC un message de requête de "handover" (message noté ici HO REQ, pour "Handover Required" ),
- le MSC adresse à son tour un message du même type (message noté ici HO REQ', pour "Handover Request") au BSC cible, noté BSCc,
- le BSC cible adresse au MSC, suivant qu'une ressource est ou non disponible dans la cellule cible, soit, dans le cas de la figure 2, un message d'accusé de réception de requête de "handover" (message noté ici HO REQ ACK, pour "Handover Request Acknowledgement") contenant lui-même un message de commande de "handover", soit, dans le cas de la figure 3, un message indiquant une impossibilité d'effectuer un "handover" vers cette cellule cible (message noté ici HO FAIL, pour "Handover Failure"),
- le MSC adresse à son tour au BSC serveur un message de même nature, à savoir soit un message de commande de "handover" (message noté ici HO COMM, pour "Handover Command"), soit un message indiquant une impossibilité d'effectuer un "handover" vers cette cellule cible (message noté ici HO REJ, pour "Handover Required Reject").

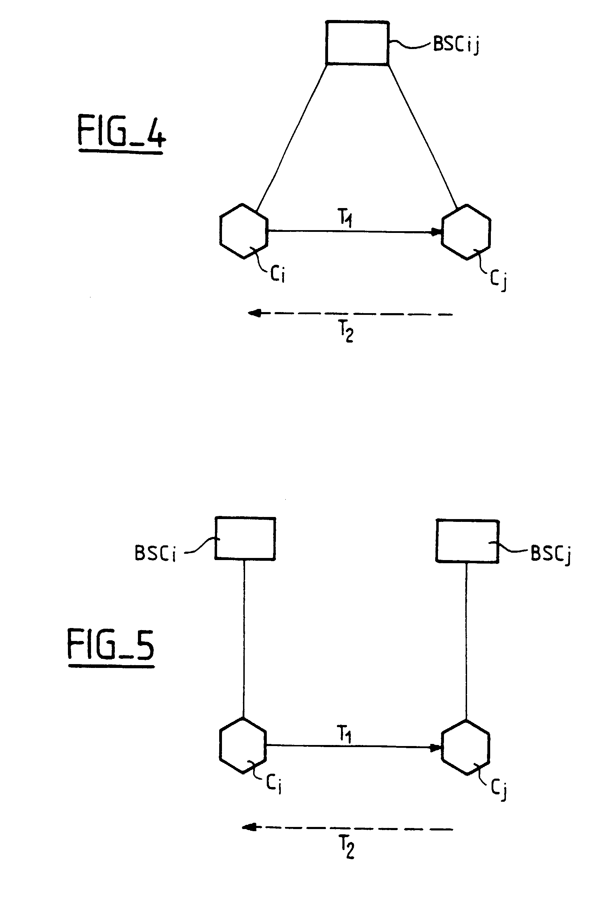

Comme illustré sur les figures 4 et 5, une fois qu'un transfert T1 d'une cellule Ci vers une cellule Cj a été effectivement réalisé, il se peut qu'un transfert inverse T2 vers la cellule serveuse initiale soit à nouveau demandé, notamment parce que les résultats de mesure de signaux radio relatifs à la nouvelle cellule serveuse et à la cellule serveuse initiale redeviennent plus favorables à la cellule serveuse initiale, par exemple parce que la station mobile se trouve en limite de couverture de ces deux cellules. Ce phénomène est aussi connu sous le nom de "ping-pong".

Un problème se pose alors dans le cas où le premier transfert a été "forcé", c'est-à-dire décidé pour des raisons autres que celles ayant trait à l'amélioration de la qualité de transmission des signaux radio dans le réseau.

En effet, si ces raisons continuent d'exister au moment de ladite demande de transfert inverse, elles sont considérées comme prioritaires par rapport aux raisons ayant trait à l'amélioration de la qualité de transmission des signaux radio dans le réseau, motivant ledit transfert inverse, et dans ces conditions un tel transfert inverse ne doit pas être autorisé.

Dans le cas, illustré sur la figure 4, où les deux cellules considérées sont contrôlées par le même BSC, noté BSCij, ce BSC a connaissance du caractère "forcé" du premier transfert et est donc à même de décider qu'un tel transfert inverse ne doit pas être effectué.

Dans le cas, illustré sur la figure 5, où les deux cellules considérées ne sont pas contrôlées par le même BSC, le BSC serveur actuel (ou BSC cible initial), noté BSCj, adresse, suivant la procédure rappelée plus haut en relation avec les figures 2 et 3, une demande de transfert au BSC cible (ou BSC serveur initial), noté BSCi, et reçoit alors de ce BSC cible un message indiquant une impossibilité d'effectuer un transfert vers la cellule cible (ou cellule serveuse initiale).

Dans ce cas une demande de transfert aura été faite inutilement, d'où un allongement inutile du temps de transfert, et une consommation inutile de ressources de transmission pour les échanges de messages de signalisation correspondants, et donc une dégradation de la qualité de service.

La présente invention vise notamment à éviter ces inconvénients, c'est-à-dire à optimiser le fonctionnement du réseau en pareil cas, et plus généralement à améliorer la coopération entre entités du réseau, lors de transferts de communications dits externes.

La présente invention a ainsi pour objet un procédé de coopération entre entités d'un réseau cellulaire de radiocommunications mobiles, lors de transferts de communication inter-cellulaires, ce procédé étant essentiellement caractérisé en ce que, lors d'un transfert de communication, d'une cellule dite cellule serveuse actuelle contrôlée par une entité de ce système dite entité serveuse actuelle, vers une cellule dite nouvelle cellule serveuse contrôlée par une entité de ce système distincte de ladite entité serveuse actuelle et dite nouvelle entité serveuse, ladite nouvelle entité serveuse est informée de la raison dudit transfert.

Ainsi, notamment dans le cas de transfert "forcé", c'est-à-dire décidé pour des raisons autres que l'amélioration de la qualité de transmission, ladite nouvelle entité serveuse, informée de ce caractère "forcé", n'effectue pas inutilement de demande de transfert inverse, et les inconvénients mentionnés plus haut sont évités.

Selon une autre caractéristique, ladite information comporte elle-même une indication quant à la durée au bout de laquelle, une fois la communication transférée de ladite cellule serveuse actuelle vers ladite nouvelle cellule serveuse, un transfert inverse peut, le cas échéant, de nouveau être demandé.

Ainsi, la nouvelle cellule serveuse est alors en mesure de déterminer le moment où un transfert inverse peut, le cas échéant, de nouveau être demandé, ce qui permet d'optimiser encore le fonctionnement du réseau.

La présente invention a également pour objet une entité de contrôle de cellule pour réseau cellulaire de radiocommunications mobiles, notamment BSC pour un réseau tel qu'un réseau du type GSM, pour la mise en oeuvre d'un tel procédé.

D'autres objets et caractéristiques de la présente invention apparaîtront à la lecture de la description suivante d'un exemple de réalisation, faite en relation avec les dessins ci-annexés, dans lesquels:
- la figure 1 rappelle schématiquement l'organisation d'un réseau de radiocommunications mobiles tel que notamment le réseau GSM,
- la figure 2 est un diagramme rappelant les différents messages échangés entre différentes entités d'un tel réseau lors d'une demande de transfert externe, dans le cas où un tel transfert s'avère possible,
- la figure 3 est un diagramme rappelant les différents messages échangés entre différentes entités d'un tel réseau lors d'une demande de transfert externe, dans le cas où un tel transfert ne s'avère pas possible,
- les figures 4 et 5 sont des schémas destinés à illustrer le problème résolu par la présente invention,

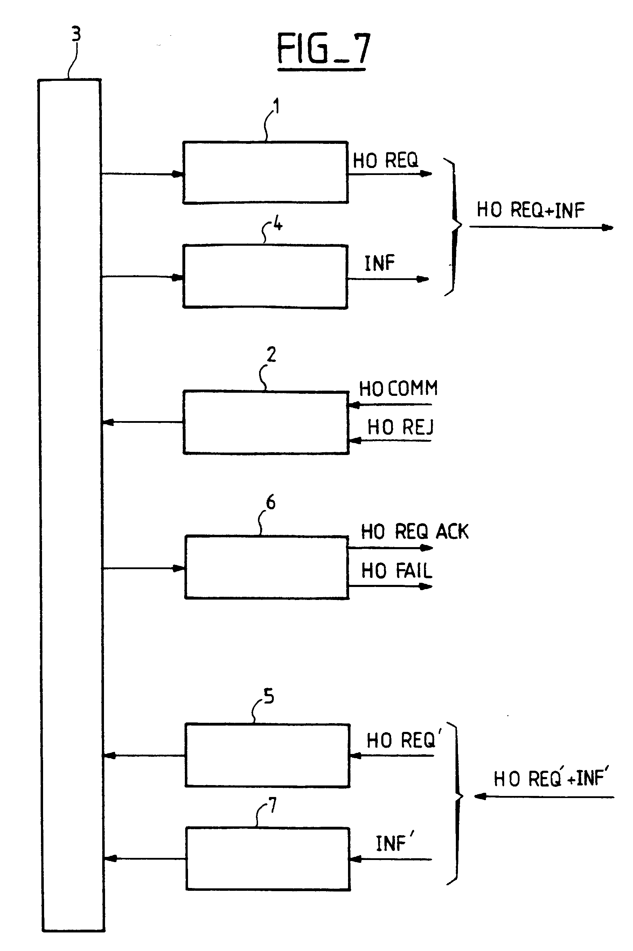

- la figure 6 est un diagramme destiné à illustrer un exemple de procédé de coopération suivant l'invention,
- la figure 7 illustre de manière schématique un exemple de moyens à mettre en oeuvre selon l'invention dans une entité de contrôle de cellules pour réseau cellulaire de radiocommunications mobiles (notamment BSC pour un réseau du type GSM).

Suivant l'invention, pour améliorer la coopération entre entités du réseau, lors d'un transfert de communication dit externe, à savoir d'une cellule dite cellule serveuse actuelle (telle que la cellule Ci illustrée sur la figure 5) contrôlée par une entité de ce système dite entité serveuse actuelle (telle que l'entité BSCi illustrée sur la figure 5), vers une cellule dite nouvelle cellule serveuse (telle que la cellule Cj illustrée sur la figure 5) contrôlée par une entité de ce système distincte de ladite entité serveuse actuelle et dite nouvelle entité serveuse (telle que l'entité BSCj illustrée sur la figure 5), ladite nouvelle entité serveuse est informée de la raison dudit transfert.

Pour cela, dans l'exemple de réalisation décrit en relation avec les figures 6 et 7, une cellule candidate vers laquelle un transfert est demandé étant dite cellule cible, l'entité de contrôle BSCc d'une cellule cible étant dite entité cible, et chaque entité cible étant susceptible de devenir la nouvelle entité serveuse si le transfert demandé vers cette cellule cible s'avère possible, chaque entité cible est informée, au cours d'une demande de transfert vers cette cellule cible, de la raison de la demande de transfert.

En outre, dans l'exemple de réalisation décrit en relation avec les figures 6 et 7, ladite information quant à la raison de la demande de transfert est transmise de l'entité serveuse BSCs à l'entité cible BSCc, via l'entité MSC (ou entité de niveau supérieur), assurant la liaison entre cette entité serveuse et cette entité cible.

Ainsi, sur le diagramme de la figure 6, une telle information quant à la raison de la demande de transfert, notée INF, est associée au message HO REQ transmis au MSC par le BSC serveur BSCs suivant la procédure rappelée plus haut en relation avec les figures 2 et 3.

De même, dans cet exemple, cette information est retransmise par le MSC au BSC cible BSCc, étant alors notée INF' et étant également, dans l'exemple illustré, associée au message correspondant HO REQ' retransmis par le MSC au BSC cible BSCc.

Il serait aussi possible, suivant un autre exemple de réalisation, non illustré spécifiquement, que chaque entité cible soit informée de la raison de la demande de transfert, non par l'entité serveuse actuelle mais par l'entité MSC. Un tel exemple de réalisation correspond notamment au cas où l'entité serveuse actuelle transmet au MSC la liste des cellules candidates, et où le MSC effectue lui-même successivement les demandes de transfert correspondantes.

Notamment, ladite information est une information quant au fait que ledit transfert est un transfert "forcé", c'est-à-dire décidé pour des raisons autres que celles ayant trait à l'amélioration de la qualité de transmission des signaux radio dans le réseau, ce qui permet alors d'éviter les inconvénients mentionnés plus haut.

Avantageusement ladite information comporte elle-même alors une indication quant à la durée au bout de laquelle, une fois le transfert effectué, un transfert inverse peut, le cas échéant, de nouveau être demandé, ce qui permet d'optimiser encore le fonctionnement du réseau.

La figure 7 illustre de manière schématique le type de moyens à mettre en oeuvre, selon un exemple de réalisation de l'invention, dans une entité de contrôle de cellule pour réseau cellulaire de radiocommunications mobiles, notamment BSC pour un réseau de type GSM.

De manière connue, et par conséquent non redécrite ici dans le détail, une telle entité BSC comporte, pour le cas de cellule contrôlée constituée par une cellule serveuse, des moyens 1 d'émission de message de demande de transfert vers une cellule cible (message HO REQ), et des moyens 2 de réception de message obtenus en réponse à une telle demande (messages HO COMM, HO REJ), ces moyens 1 et 2 fonctionnant de manière connue en liaison avec des moyens 3 de gestion de ressources radio.

Suivant l'exemple illustré, cette entité BSC comporte en outre, pour le cas de cellule contrôlée constituée par une cellule serveuse, des moyens 4 pour émettre une information INF quant à la raison d'une demande de transfert. Dans l'exemple illustré, cette information INF est transmise associée au message HO REQ de demande de transfert.

Les moyens 4 reçoivent pour cela une information, fournie par les moyens 3 de gestion de ressources radio, quant à la raison d'une demande de transfert, et mettent l'information ainsi reçue dans une forme appropriée pour sa transmission vers l'entité MSC, de manière à constituer l'information INF.

En outre, dans le cas où l'information INF comporte elle-même une indication quant à la durée au bout de laquelle un transfert inverse peut, le cas échéant, de nouveau être demandé, une telle indication est par exemple constituée, dans le cas où un tel transfert est demandé pour faire face à une surcharge de trafic dans la cellule serveuse, ou pour répondre à une demande de contrôle ou de maintenance dans cette cellule, par des données telles que par exemple une durée au bout de laquelle un évènement ayant provoqué une surcharge de trafic dans la cellule serveuse est supposé avoir disparu, ou une opération de contrôle ou de maintenance dans cette cellule sera terminée.

Egalement de manière connue, et par conséquent non redécrite ici dans le détail, une telle entité BSC comporte, pour le cas de cellule contrôlée constituée par une cellule cible, des moyens 5 de réception de messages de demande de transfert (messages HO REQ'), et des moyens 6 d'émission, soit de message d'accusé de réception de requête de "handover" (message HO REQ ACK), soit de message indiquant une impossibilité d'effectuer un transfert vers cette cellule cible (message HO FAIL), ces moyens 5 et 6 fonctionnant, également de manière connue, en liaison avec les moyens 3 de gestion de ressources radio.

Suivant l'exemple illustré, cette entité BSC comporte en outre, pour le cas de cellule contrôlée constituée par une cellule cible, des moyens 7 pour recevoir une information telle que INF' quant à la raison d'une demande de transfert. Dans l'exemple illustré, cette information INF' est reçue associée au message HO REQ' de demande de transfert.

Notamment, les moyens 3 de gestion de ressources radio sont commandés par les moyens 7, de manière à interdire, dans le cas de cellule contrôlée constituée par une cellule successivement cible et serveuse, l'émission, par les moyens 1, d'une demande de transfert inverse dans le cas d'un transfert initial "forcé".

En outre, dans le cas où ladite information INF' comporte une indication relative à la durée au bout de laquelle un transfert inverse peut, le cas échéant, de nouveau être demandé, les moyens 3 de gestion de ressources radio sont en outre commandés par les moyens 7 pour autoriser l'émission d'une telle demande de transfert inverse au bout d'une telle durée ou au bout d'une durée, par exemple prédéterminée, fonction de ladite raison.

Les moyens 1 d'émission de messages de demande de transfert (messages REQ) et les moyens 2 de réception de messages obtenus en réponse à une telle demande (messages HO REJ, HO COMM), ainsi que les moyens 4 de réception de messages de demande de transfert (messages HO REQ'), et les moyens 5 d'émission, soit de message d'accusé de réception de requête de "handover" (message HO REQ ACK), soit de message indiquant une impossibilité d'effectuer un transfert vers une cellule cible (message HO FAIL), de même que les moyens 3 de gestion de ressources radio (pour ce qui est de leurs fonctions autres que celles se rapportant à la présente invention), peuvent être des moyens classiques, qui ne nécessitent donc pas d'être redécrits ici.

La réalisation particulière des moyens 4 pour émettre une information INF quant à des cellules précédemment rejetées, des moyens 7 pour recevoir une information correspondante INF', et des fonctions particulières des moyens 3 de gestion de ressources radio se rapportant à la présente invention, de manière à faire fonctionner l'ensemble selon le procédé ainsi décrit, ne présentant pas de difficulté particulière pour l'homme du métier, ne nécessitent pas non plus de description spécifique.

On comprendra en outre que l'invention n'est pas limitée aux exemples décrits, et qu'elle permet plus généralement d'améliorer la coopération entre entités d'un réseau cellulaire de radiocommunications mobiles, dans le cas de transferts de communication inter-cellulaires dits externes.

## Revendications

1. Procédé de coopération entre entités d'un réseau cellulaire de radiocommunications mobiles, lors de transferts de communication inter-cellulaires, caractérisé en ce que, lors d'un transfert de communication, d'une cellule dite cellule serveuse actuelle (Ci) contrôlée par une entité de ce système dite entité serveuse actuelle (BSCi), vers une cellule dite nouvelle cellule serveuse (Cj) contrôlée par une entité de ce système distincte de ladite entité serveuse actuelle et dite nouvelle entité serveuse (BSCj), ladite nouvelle entité serveuse (BSCj) est informée de la raison dudit transfert.

2. Procédé selon la revendication 1, caractérisé en ce que ladite information quant à la raison dudit transfert comporte elle-même une indication quant à la durée au bout de laquelle un transfert inverse peut, le cas échéant, de nouveau être demandé.

3. Procédé selon l'une des revendications 1 et 2, caractérisé en ce que, une cellule candidate vers laquelle un transfert est demandé étant dite cellule cible, l'entité de contrôle d'une cellule cible étant dite entité cible (BSCc), et chaque entité cible étant susceptible de devenir ladite nouvelle entité serveuse si le transfert demandé vers cette cellule cible s'avère possible, chaque entité cible est informée, au cours d'une demande de transfert vers cette cellule cible, de la raison de la demande de transfert.

4. Procédé selon la revendication 3, caractérisé en ce que ladite information quant à la raison de la demande de transfert est transmise par l'entité serveuse actuelle (BSCs) à l'entité cible (BSCc) via une entité du réseau dite de niveau supérieur (MSC) assurant la liaison entre cette entité serveuse et cette entité cible.

5. Entité (BSC) de contrôle de cellules pour réseau cellulaire de radiocommunications mobiles, pour la mise en oeuvre du procédé suivant l'une des revendications 1 à 4, caractérisée en ce qu'elle comporte:
- pour le cas de cellule contrôlée constituée par une nouvelle cellule serveuse, des moyens pour recevoir une information quant à la raison dudit transfert.

6. Entité selon la revendication 5, pour la mise en oeuvre du procédé selon l'une des revendications 3 et 4, caractérisée en ce qu'elle comporte:
- pour le cas de cellule contrôlée constituée par une cellule serveuse, des moyens (4) d'émission d'une information (INF) quant à la raison d'une demande de transfert,
- pour le cas de cellule contrôlée constituée par une cellule cible, des moyens (7) de réception d'une information (INF') quant à la raison d'une demande de transfert,
- pour le cas de cellule contrôlée constituée par une cellule successivement cible et serveuse, des moyens (3) pour interdire ou non l'émission d'une demande de transfert, suivant ladite raison.

7. Entité selon la revendication 6, pour la mise en oeuvre du procédé suivant la revendication 2, caractérisée en ce qu'elle comporte en outre:
- pour le cas de cellule contrôlée constituée par une cellule successivement cible et serveuse, des moyens (3) pour autoriser l'émission d'une demande de transfert au bout de ladite durée, ou d'une durée fonction de la raison dudit transfert.
